# EUROPEAN PATENT APPLICATION

(11) **EP 4 455 108 A1**
(43) Date of publication of application: **30.10.2024**
(21) Application number: 23169541.2
(22) Date of filing: 24.04.2023
(51) Int. Cl.: C04B 28/04, C04B 28/06, C04B 28/14

(54) **METHOD OF ASSEMBLING A FLOOR CONSTRUCTION**

(71) Applicant: Sika Technology AG, 6340 Baar (CH)
(72) Inventor: BENIGHAUS, Tobias, 48165 Münster (DE); KIGHELMAN, Julien, 38090 Villefontaine (FR); KUPICH, Jan, 48727 Billerbeck (DE); SCHNEIDER, Nick, 48727 Billerbeck (DE)
(74) Representative: Sika Patent Attorneys

(57) **Abstract**

The present invention relates to a method for the assembly of a floor construction comprising a step of mixing a dry underlayment composition having a ternary binder with an aqueous dispersion of organic resins, forming a levelling layer from this mixture on a porous substrate, and adhering a cover material thereto.

## Description

### Technical field

The present invention relates to a method for the assembly of a floor construction.

### Background of the invention

In the flooring sector, among others, there is a tendency to use so-called binary and ternary binders to formulate building materials, e.g. underlayments. An underlayment being a layer of material applied to a substrate such as screed and under the floor covering to level any unevenness. Binary binders include aluminate cement and calcium sulphate as hydraulic binders. Ternary binders also include Portland cement as a third hydraulic binder. Binary and ternary binders have the advantage of a faster development of physical properties a compared to normal cements. This means that work can continue within a shorter time, which is a decisive economic advantage.

In areas where the floor may come into contact with water or moisture, e.g. in bathrooms, penetrating water or moisture can cause considerable problems. For example, damage may occur to the floor construction, e.g. detachment of tiles as a possible component of the floor construction, or mould growth. To avoid such damage, it is necessary to provide the floor construction with a water vapor barrier. One way to achieve this in a flooring application is the application of a primer on the subfloor, typically a porous substrate, prior to the application of an underlayment. Known primers include two-component epoxy primers and one-component polyurethane primers. Another way is to apply films of thermoplastic polymers, for example polyethylene films, on the subfloor. These measures require extra steps and therefore are less economic. Additionally, in the case of reactive primers, problems with environment, health, and safety may occur. This is especially the case with epoxy primers. Furthermore, building a floor construction with a higher number of layers bears the risk of more application failures.

There is therefore a continued need for solutions for the assembly of floor constructions.

### Summary of the invention

It is an objective of the present invention to provide a method for the assembly of floor construction, especially a floor construction having water vapor barrier properties. The methods of the present invention should comprise a low number of steps. Especially, methods of the present invention should not rely on the use of primers such as epoxy primers or polyurethane primers.

It has been surprisingly found that the objectives of the present invention can be solved by a method as claimed in claim 1.

Other aspects are the subject of independent claims. Preferred embodiments are the subject of dependent claims.

### Ways of carrying out the invention

In a first aspect the present invention relates to a method of assembling a floor construction on a substrate, said method comprising the steps of
(i) providing a substrate which is porous,
(ii) mixing a dry underlayment composition with an aqueous dispersion of organic resins to prepare a self-levelling underlayment composition,
(iii) applying said self-levelling underlayment composition to said substrate to form a levelling layer,
(iv) applying an adhesive layer on top of the levelling layer, and
(v) applying a cover material to the adhesive layer while the adhesive layer is in uncured state to bond the cover material,
whereby the dry underlayment composition comprises a ternary binder comprising Portland cement, aluminate cement, and a source of calcium sulfate.

A porous substrate in the sense of the present invention is a substrate with a porosity large enough to allow the uptake of water, the transport of water by capillary suction, or the transport of water vapor by a gradient of water vapor pressure. A porous substrate of the present invention has a sufficient strength to carry the load of the floor construction assembled on such substrate. Porous substrates are preferably selected from the list consisting of hardened cementitious materials, especially concrete or mortar, screeds, bricks, especially clay bricks, poroton stone, sand limestone, aerated concrete stone, ceramic tiles with a water absorption of > 0.5 % as measured according to EN 1062-3, hardened calcium sulfate based materials, and wood.

Preferably, in a method of the present invention, the porous substrate is a cementitious material, in particular concrete or screed.

Portland Cement within the present context is a cement of the type CEM I, CEM II, CEM III, CEM IV or CEM V according to standard EN 197-1:2018. A Portland cement can also be a mixture of these cement types. Portland cements described in alternative standards, e.g. ASTM standards or Chinese standards, are equally suitable. The clinker content in a Portland cement of the present invention is preferably at least 65% by weight, based on the total dry weight of the cement. In certain embodiments of the present invention, the clinker content is at least 80% by weight, based on the total dry weight of the cement. According to preferred embodiments, the Portland cement used in a hydraulic binder is a CEM I according to EN 197-1:2018.

An aluminate cement within the present context is a cement with a main phase consisting of hydraulic calcium aluminates, preferably being CA (CaO · Al₂O₃). Depending on exact type of the aluminate cement, other calcium aluminates such as CA2, C3A, C12A7 are also present. Aluminate cements of the present invention typically also contain other phases selected from belite (C2S), tricalcium silicate, ferrites (C2F, C2AF, C4AF) and ternesite (C5S2$). Aluminate cements of the present invention may further comprise calcium carbonate. In particular, an aluminate cement of the present invention complies with EN 14647:2006-01. Calcium aluminate cement (CAC) is a particularly commonly used type of aluminate cement and is specifically preferred in the context of the present invention. Suitable aluminate cements can be obtained commercially, for example, from Kerneos SA or Royal White Cement.

An aluminate cement of the present invention may also be calcium sulfoaluminate cement (CSA). CSA within the present context is a cement with a main phase consisting of C₄(A₃₋ₓFₓ)₃$ (4 CaO · 3-x Al₂O₃ · x Fe₂O₃ · CaSO₄) where x is an integer of from 0 - 3. CSA cements of the present invention typically comprise further phases selected from aluminates (CA, C₃A, C₁₂A₇), belite (C₂S), ferrites (C₂F, C₂AF, C₄AF), ternesite (C₅S₂$) and anhydrite. In the present context C stands for CaO, A stands for Al₂O₃, F stands for Fe₂O₃, and $ stands for CaSO₄. According to certain embodiments CSA cements of the present invention comprise 20-75 w%, preferably 25-50 w% C₄A₃$, 0-10 w%, preferably 1-5 w% aluminates, 0-70 w%, preferably 1-50 w% belite, 0-35 w%, preferably 1-10 w% ferrites, 0-20 w%, preferably 1-10 w% ternesite, 0-50 w%, preferably 5-45 w% anhydrite, and 0-25 w% CaO, preferably 1-20 w% CaO, each based on the total dry weight of the CSA. However, the use of CSA is generally less preferred within the present context.

In the context of the present invention, the source of calcium sulfate preferably is selected from anhydrite (CaSO₄), calcium sulfate hemihydrate (CaSO₄ · ½ H₂O), calcium sulfate dihydrate (CaSO₄ · 2 H₂O) or mixtures thereof. Here, the calcium sulfate hemihydrate includes the α-calcium sulfate hemihydrate and the β-calcium sulfate hemihydrate. Calcium sulfate of the present invention may be based on FGD gypsum, phosphogypsum, as well as natural gypsum. In preferred embodiments, the source of calcium sulfate is α-calcium sulfate hemihydrate.

It is preferred in a method of the present invention that the dry underlayment composition comprises a ternary binder consisting of (relative to the total dry weight of the binder)
a) 30 - 50 w%, preferably 35 - 45 w% of aluminate cement,
b) 30 - 50 w%, preferably 35 - 45 w% of Portland cement,
c) 15 - 30 w%, preferably 20 - 25 w% of at least one source of calcium sulfate.

According to a particularly preferred embodiment, the ternary binder consists of 38 w% of aluminate cement, 38 w% of Portland cement, and 24 w% of calcium sulfate, preferably α-calcium sulfate hemihydrate.

According to a particularly preferred embodiment, the ternary binder consists of 35 w% of aluminate cement, 44 w% of Portland cement, and 21 w% of calcium sulfate, preferably α-calcium sulfate hemihydrate.

According to a particularly preferred embodiment, the ternary binder consists of 35 w% of aluminate cement, 35 w% of Portland cement, and 30 w% of calcium sulfate, preferably α-calcium sulfate hemihydrate.

According to a particularly preferred embodiment, the ternary binder consists of 44 w% of aluminate cement, 35 w% of Portland cement, and 21 w% of calcium sulfate, preferably α-calcium sulfate hemihydrate.

In particular, the weight ratio of aluminate cement to Portland cement is between 2:1 to 1:2, preferably 1:1, and the weight ratio of aluminate cement to the at least one source of calcium sulfate is between 10:1 to 1:10, preferably between 2:1 to 1:5.

The content of the ternary binder in the dry underlayment composition preferably is between 20 - 70 w%, more preferably between 30 - 60 w%, especially between 40 - 55 w%, relative to the total weight of the dry underlayment composition.

The dry underlayment composition may additionally comprise a non-hydraulic binder such as lime, and/or a pozzolanic binder. A pozzolanic binder stands in particular for type II concrete additives with latent hydraulic and/or pozzolanic character according to EN 206-1. The term pozzolane thus also encompasses latent hydraulic materials. In particular, pozzolanes are selected from of reactive slags, fly ash, silica fume, microsilica, clay minerals, metakaolin, rice husk ash, burnt shale, volcanic ashes, pumice, and/or trass.

The dry underlayment composition preferably additionally comprises aggregates and/or fillers and admixtures.

Aggregates can be any particulate material that does not participate in the hydraulic reaction. Examples for aggregates include sand, gravel, slag, and crushed stone such as for example crushed limestone or crushed dolomite. Aggregates may also be of biological origin, such as for example aggregate derived from hemp, sunflower, rapeseed, flax, or sisal. Aggregates can be characterized by their granulometry, which can be measured for example by sieve analysis according to standard DIN 66165-2:2016. Aggregates used in the context of the present invention preferably are characterized by a granulometry with a grain size between 0.01 and 10 mm, preferably 0.05 and 5 mm, most preferred between 0.06 and 1 mm, meaning that less than 1% of aggregate used has a particle size outside the given ranges when measured according to DIN 66165-2:2016.

Fillers can be mineral materials characterized by a granulometry with a grain size of below 0.063 mm when measured according to DIN 66165-2:2016. Typical fillers are finely ground limestones.

Admixtures may be selected from fibers (e.g. cellulose fibers, glass fibers and/or PE fibers), rheology modifiers, plasticizers, superplasticizers, redispersible polymer powders, water retention agents, defoamers, accelerators, retarders, pigments, chromium VI reducers, biocides, wetting agents, and/or de-dusting additives.

It is in particular possible that the dry underlayment composition comprises an accelerator selected from carbonates, especially sodium carbonate and/or lithium carbonate.

If the admixture comprises a redispersible polymer powder, it is preferred that such redispersible polymer powder is chemically different from the organic resin in the aqueous dispersion. If the admixture comprises a redispersible polymer powder it is preferred that the weight ratio of redispersible polymer powder to organic resin in the self-levelling underlayment composition is not higher than 0.3, preferably not higher than 0.1. It is possible that the admixture is free from any redispersible polymer powder.

Especially, the dry underlayment composition additionally comprises lithium carbonate in an amount of not more than 0.5 w%, preferably in an amount between 0.05 - 0.2 w%, relative to the total dry weight of the ternary binder.

It is in particular possible that the dry underlayment composition comprises a retarder selected from carboxylic acids and/or hydroxy-carboxylic acids, especially citric acid and/or tartaric acid.

Especially, the dry underlayment composition additionally comprises at least one retarder in an amount of not more than 0.5 w%, preferably in an amount between 0.05 - 0.2 w%, relative to the total dry weight of the ternary binder.

The aqueous dispersion of organic resins preferably comprises water as a continuous phase, organic resins dispersed therein, and surfactants. Preferably, the aqueous dispersion is an anionic dispersion where the negative charge is brought about by the presence of anionic surfactants. The solids content of the aqueous dispersion may vary in wide ratios. For example, the aqueous dispersion may have a solid content between 10 - 70 w%. A lower solid content may be preferable in order to increase the amount of water present when mixing the aqueous dispersion with the dry underlayment composition. A higher solids content may be preferred to increase the content of organic resin in the levelling layer.

The organic resins dispersed may be selected from the group consisting of acrylic resins and/or vinylic resins, polyurethane resins, epoxy resins, polyester resins, alkyd resins, phenolic resins, melamin resins, silicone resins, and/or organic resins of natural origin such as rosin, shellac, amber, balsam, and styrax resins which may additionally be modified. Thereof, polyurethane resins and epoxy resins are not preferred.

Vinylic resins especially are copolymers of two or more monomers selected from the group consisting of ethylene, propylene, butylene, isoprene, butadiene, styrene, acrylonitrile, acrylic acid, methacrylic acid, esters of acrylic acid, esters of methacrylic acid, vinylesters, vinylchloride, and vinyl alcohol. Preferred vinylic resins are copolymers of vinylacetate and ethylene, vinylacetate and ethylene and methyl methacrylate, vinylacetate and ethylene and vinylester, vinylacetate and ethylene and acrylic acid ester, vinylchloride and ethylene and vinyllaureate, vinylacetate and vinylversatate, acrylic ester and styrene, acrylic ester and styrene and butadiene, acrylic ester and acrylonitrile, styrene and butadiene, acrylic acid and styrene, methacrylic acid and styrene, styrene and acrylic acid ester, styrene and methacrylic acid ester.

It is preferred, within the present context, that the aqueous dispersion of organic resins is free from any bituminous material. Bitumenous material has the risk of migration of components causing discoloration of any cover layer.

According to particularly useful embodiments of the present invention the dry underlayment composition and/or the aqueous dispersion of organic resins comprises at least one hydrophobic constituent. The addition of hydrophobic constituents may be useful to enhance the properties of the levelling layer as water vapor barrier. Suitable hydrophobic constituents can be fatty acids and their salts, silanes, siloxanes, and/or silicones. In particular, hydrophobic constituents are present in an amount of 2.5 - 7.5 w%, relative to the total weight of the self-levelling underlayment composition.

It is possible in a method of the present invention to mix the dry underlayment composition with the aqueous dispersion of organic resins to prepare the self-levelling underlayment composition without the addition of further water. In this case, the water needed to achieve the rheology of self-levelling properties and for the hydration reaction of cementitious binders is supplied by the aqueous dispersion. This is preferred within the present context.

It is, however, also possible to add further water when mixing the dry underlayment composition with the aqueous dispersion of organic resins to prepare the self-levelling underlayment composition.

The term self-levelling refers to the ability of said composition to free flow and to form a flat surface when poured on a substrate at 23°C and 1013 mbar. In the present context, the self-levelling underlayment composition has a spreading diameter directly after mixing with water and as measured according to standard EN 12706:1999 of at least 200 mm, preferably of at least 300 mm.

Preferably, the total water present in the self-levelling underlayment composition is between 10 - 30 w%, relative to the total weight of the self-levelling underlayment composition.

Methods and devices for mixing of the dry underlayment composition and the aqueous dispersion of organic resins are not particular limited and are known to the person skilled in the art. It is for example possible to mix the dry underlayment composition and the aqueous dispersion of organic resins by means of a hand held agitator, Hobart mixer, portable concrete mixer, mixing truck, mixing bucket, paddle mixer, jet mixer, screw mixer, auger mixer, horizontal single shaft mixer, twin shaft paddle mixer, vertical shaft mixer, ribbon blender, orbiting mixer, change-can mixer, tumbling vessel, vertical agitated chamber or air agitated operations. Mixing can be continuously, semi-continuously or batch-wise. Continuous mixing offers the advantage of a high material throughput.

The self-levelling underlayment composition preferably is applied to the substrate in a layer thickness between 1 to 100 mm, preferably 2 to 50 mm.

The self-levelling underlayment composition can be applied to the porous substrate by pouring and/or by the use of a trowel, brush or roller. The use of a notched trowel can be particularly useful to achieve a desired layer thickness. According to another embodiment, the self-levelling underlayment composition is applied to the substrate in a spray application. Spraying offers the advantage that the application can be done very quickly and in a continuous manner. Suitable equipment for spray applications is known to the person skilled in the art.

It is generally preferable that the porous substrate is cleaned before application of the self-levelling underlayment composition. It is also possible, but not preferred, to apply a primer to the porous substrate before application of the self-levelling underlayment composition.

A levelling layer forms when the self-levelling underlayment composition is applied to the porous substrate. This is due to the self-levelling properties of the self-levelling underlayment composition. It is possible to support the formation of a self-levelling layer by the use of a trowel or roller, especially a notched roller.

A levelling layer is understood to be a layer of material that has a flat surface and that is used to accommodate any unevenness of a porous substrate to which it is applied. In particular, a levelling layer has a flat, horizontal surface without inclination. A levelling layer may have variable thickness.

Hardening of the self-levelling underlayment composition starts immediately upon addition of water to the dry underlayment composition. The levelling layer therefore develops physical properties such as compressive strength and adhesion strength over time. Typically, a levelling layer of the present invention Is hardened at temperatures between 0 °C and +50 °C, preferably between +5 °C and +35 °C and at ambient pressure. It is an advantage of the levelling layer of the present invention that physical properties are achieved within short time. It is therefore possible, that an adhesive is applied on top of the levelling layer after a short waiting time. In particular, in a method of the present invention, the waiting time between steps (iii) and (iv) is not more than 24 hours, preferably is not more than 16 hours.

It is preferred, that the levelling layer forms a water vapor barrier. In particular, the levelling layer has a water vapor diffusion resistance factor µ of approximately 3000, measured according to standard ISO 12572:2016.

The adhesive to apply the adhesive layer on top of the levelling layer is not particularly limited. Especially, the adhesive is a dispersion floor adhesive, a polyurethane adhesive, an adhesive based on silane-terminated polyurethanes, or an epoxy-based adhesive.

A cover material is applied to the adhesive layer. It is important that the cover material is applied to the adhesive layer while the adhesive layer is in uncured state. This is necessary for the adhesive to form a firm bond between the levelling layer and the cover material. The cover material can be selected from a thermoplastic material, especially a PVC tile, plank or sheet, a rubber, a carpet, wood, especially parquet, or a polymer-based coating.

It is a particular advantage of the present invention that the levelling layer can provide water vapor diffusion resistance. The risk of failure of the adhesive layer and/or discoloration of the cover material is therefore reduced.

It is preferred within the present context that the floor construction is free from epoxy resins and polyurethane resins.

In another aspect the present invention relates to a kit of parts suitable to form a levelling layer, said kit of parts comprising a first component A and a second component **B,** wherein said first component **A** and said second component **B are** stored spatially apart from each other, said first component **A** comprising a ternary binder consisting of (relative to the total dry weight of the binder)
a) 30 - 50 w%, preferably 35 - 45 w% of aluminate cement,
b) 30 - 50 w%, preferably 35 - 45 w% of Portland cement,
c) 15 - 30 w%, preferably 20 - 25 w% of at least one source of calcium sulfate, and said second component **B** comprising or consisting of an aqueous dispersion of organic resins.

All features and embodiments as described above also apply to this aspect.

The kit of parts of the present invention preferably consists of a first component A and a second component B wherein component A and component B are stored spatially apart from each other. Mixing of the component A and the component B of a kit of parts to form a self-levelling underlayment composition is preferably done at the place of usage and shortly before the planned usage. This is because upon mixing of the component A and the component B hardening starts.

The mix ratio of component A and component B of a kit of parts of the present invention to form the self-levelling underlayment composition is not particularly limited. However, according to preferred embodiments, the mix ratio of component A to component B is such that self-levelling properties of the mixture result without the further addition of water. Self-levelling is to be understood as explained above.

In another aspect, the present invention relates to a method to form a levelling layer comprising the steps of
(i) mixing components **A** and **B** of a kit of parts as described above,
(ii) applying the mixture obtained in step (i) to a substrate, and
(iii) hardening the applied mixture.

All features and embodiments as described above also apply to this aspect.

### Examples

The following table 1 provides an overview of the raw materials used.

**Table 1: raw materials used**

| | |
|---|---|
| CAC | Calcium aluminate cement: mixture of Ternal RG and Ternal LC from Imerys Aluminates in a weight ratio of 1.2:1 |
| OPC | CEM I 52.5R |
| α-CaSO₄ | α-calciumsulfate hemihydrate based on REA-gypsum (Blaine fineness 3000 cm²/g measured acc. standard EN 196-6:2010) |
| β-CaSO₄ | β-calciumsulfate hemihydrate (particle size d95 < 100 µm) |
| Dihydrate | Calciumsulfate dihydrate based on natural gypsum (>96% CaSO₄, particle size d95 < 50 µm) |
| Sand | Quartz sand, 0.1 - 0.3 mm |
| CaCO₃ | Limestone filler, particle size 20 - 90 µm |
| RDP | Redispersible polymer powder based on co(polyvinylacetate-polyvinylversatate) with a minimal film forming temperature of 0°C |
| Li₂CO₃ | Lithium carbonate powder purchased from Sigma-Aldrich |
| Retarder | Mixture of citric acid and tartaric acid (purchased from Sigma-Aldrich) |
| Aqueous dispersion | Anionic dispersion of hydrophobic natural resins in water (60% solids content), biocides (0.012 w%), and defoamer (0.1 w%) |
| Additives | Mixture of sodium carbonate, thickeners (cellulose ether), plasticizers (polycarboxylate ethers), defoamer |

### Example 1

Dry underlayment compositions A-1 to A-9 were prepared with compositions as indicated in table 2. To prepare the respective component, all ingredients were mixed on a blade mixer at 300 - 600 rpm until visually fully homogeneous.

**Table 2: Dry underlayment compositions A-1 to A-9**

| | **A-1** | **A-2** | **A-3** | **A-4** | **A-5** | **A-6** | **A-7** | **A-8** | **A-9** |
|---|---|---|---|---|---|---|---|---|---|
| CAC | 20 | 20 | 20 | 20 | 20 | 15 | 25 | 20 | 20 |
| OPC | 20 | 20 | 20 | 15 | 25 | 20 | 20 | 20 | 20 |
| α-CaSO₄ | 12.4 | | | 12.4 | 12.4 | 12.4 | 12.4 | 12.4 | 12.4 |
| β-CaSO₄ | | 12.4 | | | | | | | |
| Dihydrate | | | 12.4 | | | | | | |
| Sand | 31.68 | 31.68 | 31.68 | 31.68 | 31.68 | 31.68 | 31.68 | 31.68 | 31.68 |
| CaCO₃ | 13.34 | 13.34 | 13.34 | 18.34 | 8.34 | 18.34 | 8.34 | 18.34 | 8.34 |
| RDP | 2 | 2 | 2 | 2 | 2 | 2 | 2 | 2 | 2 |
| Li₂CO₃ | 0.05 | 0.05 | 0.05 | 0.05 | 0.05 | 0.05 | 0.05 | 0.05 | 0.05 |
| Retarder | 0.07 | 0.07 | 0.07 | 0.07 | 0.07 | 0.07 | 0.07 | 0.07 | 0.07 |
| Additive | 0.46 | 0.46 | 0.46 | 0.46 | 0.46 | 0.46 | 0.46 | 0.46 | 0.46 |

Self-levelling underlayment compositions SL-1 to SL-9 were prepared from the respective underlayment composition by mixing with the aqueous dispersion in a weight ratio of 5:1 on a blade mixer for 5 min at 600 rpm. A floor construction was assembled on standard concrete slab. Therefore, the respective self-levelling underlayment composition was applied in a thickness of 3 mm directly onto a concrete slab to produce levelling layers LL-1 to LL-9. After 24 h of curing at 23°C and 50% r.h. a water-based acrylic adhesive (SikaBond-150 Premium Floor available from Sika Deutschland GmbH) was applied on top of the respective levelling layer. A white PVC-covering was applied directly on top of the adhesive layer while still wet. The respective floor constructions FC-1 to FC-9 were cured for 7 days at 23 °C and 50% r.h.

The spreading diameter of the self-levelling compositions prepared was measured following a protocol similar to the standard EN 12706 after the time indicated in the below table 3.

**Table 3: Spreading diameter in cm of self levelling compositions SL-1 to SL-9**

| Time after mixing | **SL-1** | **SL-2** | **SL-3** | **SL-4** | **SL-5** | **SL-6** | **SL-7** | **SL-8** | **SL-9** |
|---|---|---|---|---|---|---|---|---|---|
| 3 min | 30 | 29 | 30.5 | 29 | 30.5 | 30 | 30 | 30 | 30 |
| 15 min | 30 | 28.5 | 30 | 30 | 30.5 | 30.5 | 30.5 | 30 | 31 |

The water vapor diffusion resistance factor µ was measured according to standard ISO 12572:2016 on the levelling layers after 24 hours of curing at 23°C and 50% r.h. All levelling layers LL-1 to LL-9 had a water vapor diffusion resistance factor µ between 3000 and 3200.

After 7 days at 23°C / 50% r.h., the respective floor constructions were placed over a water reservoir and the edges were sealed with water-vapor tight sealant (e.g. aluminium covered adhesive tape) so that the water vapor was trapped under the concrete slab. The water vapor could only reach the adhesive layer by passing through the respective levelling layer LL-1 to LL-9. This assembly was kept at 23 °C for 21 weeks. No discoloration of the white PVC covering was observed during this time. Also, no delamination or debonding was observed during this time. The respective floor constructions were stored at 70 °C for 7d. No discoloration of the white PVC covering was observed during this time.

## Claims

1. A method of assembling a floor construction on a substrate, said method comprising the steps of
(i) providing a substrate which is porous,
(ii) mixing a dry underlayment composition with an aqueous dispersion of organic resins to prepare a self-levelling underlayment composition,
(iii) applying said self-levelling underlayment composition to said substrate to form a levelling layer,
(iv) applying an adhesive layer on top of the levelling layer, and
(v) applying a cover material to the adhesive layer while the adhesive layer is in uncured state to bond the cover material,
whereby the dry underlayment composition comprises a ternary binder comprising Portland cement, aluminate cement, and a source of calcium sulfate.

2. The method as claimed in claim 1, **characterized in that** the dry underlayment composition comprises a ternary binder consisting of (relative to the total dry weight of the binder)
a) 30 - 50 w%, preferably 35 - 45 w% of aluminate cement,
b) 30 - 50 w%, preferably 35 - 45 w% of Portland cement,
c) 15 - 30 w%, preferably 20 - 25 w% of at least one source of calcium sulfate.

3. The method as claimed in at least one of the preceding claims, **characterized in that** the weight ratio of aluminate cement to Portland cement is between 2:1 to 1:2, preferably 1:1, and the weight ratio of aluminate cement to the at least one source of calcium sulfate is between 10:1 to 1:10, preferably between 2:1 to 1:5.

4. The method as claimed in at least one of the preceding claims, **characterized in that** the dry underlayment composition additionally comprises lithium carbonate in an amount of not more than 0.5 w%, preferably in an amount between 0.05 - 0.2 w%, relative to the total dry weight of the ternary binder.

5. The method as claimed in at least one of the preceding claims, **characterized in that** the dry underlayment composition additionally comprises at least one retarder in an amount of not more than 0.5 w%, preferably in an amount between 0.05 - 0.2 w%, relative to the total dry weight of the ternary binder.

6. The method as claimed in at least one of the preceding claims, **characterized in that** the aqueous dispersion of organic resins is free from any bituminous material.

7. The method as claimed in at least one of the preceding claims, **characterized in that** the porous substrate is a cementitious material, especially concrete or screed.

8. The method as claimed in at least one of the preceding claims, **characterized in that** the self-levelling underlayment composition is applied to the substrate in a layer thickness between 1 to 100 mm, preferably 2 to 50 mm.

9. The method as claimed in at least one of the preceding claims, **characterized in that** the levelling layer has a water vapor diffusion resistance factor µ of approximately 3000, measured according to standard ISO 12572:2016.

10. The method as claimed in at least one of the preceding claims, **characterized in that** the cover material is selected from thermoplastic material, especially a PVC tile, plank or sheet, a rubber, a carpet, wood, especially parquet, or a polymer-based coating.

11. The method as claimed in at least one of the preceding claims, **characterized in that** the waiting time between steps (iii) and (iv) is not more than 24 hours, preferably is not more than 16 hours.

12. The method as claimed in at least one of the preceding claims, **characterized in that** the floor construction is free from epoxy resins and polyurethane resins.

13. Kit of parts suitable to form a levelling layer, said kit of parts comprising a first component **A** and a second component **B,** wherein said first component **A** and said second component **B** are stored spatially apart from each other, said first component **A** comprising a ternary binder consisting of (relative to the total dry weight of the binder)
a) 30 - 50 w%, preferably 35 - 45 w% of aluminate cement,
b) 30 - 50 w%, preferably 35 - 45 w% of Portland cement,
c) 15 - 30 w%, preferably 20 - 25 w% of at least one source of calcium sulfate,
and said second component **B** comprising or consisting of an aqueous dispersion of organic resins.

14. A method to form a levelling layer comprising the steps of
(i) mixing components **A** and **B** of a kit of parts as claimed in claim 13,
(ii) applying the mixture obtained in step (i) to a substrate, and
(iii) hardening the applied mixture.
